(19) Europäisches Patentamt
European Patent Office
Office européen des brevets

(11) Veröffentlichungsnummer: **0 083 733**
**B1**

(12) # EUROPÄISCHE PATENTSCHRIFT

(45) Veröffentlichungstag der Patentschrift: **26.02.86**

(51) Int. Cl.⁴: **C 08 G 18/61**, C 08 G 18/10, B 29 C 33/56

(21) Anmeldenummer: **82111190.3**

(22) Anmeldetag: **03.12.82**

(54) **Verwendung von Polyisocyanat-Additionsprodukten als Formtrennmittel für Form innenlacke bei der Herstellung von mit einer Lackschicht versehenen Formkunststoffen.**

(30) Priorität: **15.12.81 DE 3149619**

(43) Veröffentlichungstag der Anmeldung: **20.07.83 Patentblatt 83/29**

(45) Bekanntmachung des Hinweises auf die Patenterteilung: **26.02.86 Patentblatt 86/9**

(84) Benannte Vertragsstaaten: **AT BE DE FR GB IT NL SE**

(56) Entgegenhaltungen:
**DE - A - 2 356 692**
**DE - A - 2 558 523**
**DE - A - 3 012 126**

(73) Patentinhaber: **BAYER AG, Konzernverwaltung RP Patentabteilung, D-5090 Leverkusen 1 Bayerwerk (DE)**

(72) Erfinder: **Schönfelder, Manfred, Dr., Höhenstrasse 126, D-5090 Leverkusen 3 (DE)**
Erfinder: **Haas, Peter, Dr., Zwengenberger Strasse 43, D-5657 Haan 1 (DE)**
Erfinder: **Avar, Geza, Dr., Bamberger Strasse 1, D-5090 Leverkusen 1 (DE)**
Erfinder: **Steinberger, Helmut, Dr., Winand-Rossi-Strasse 36, D-5090 Leverkusen 1 (DE)**

**EP 0 083 733 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung betrifft die Verwendung von bestimmten Polyisocyanat-Polyadditionsprodukten als Formtrennmittel für Forminnenlacke bei der Herstellung von, mit einer Lackschicht versehenen, Formkunststoffen nach dem "in-mould-coating-Verfahren".

Bei der Herstellung von Formkunststoffen, beispielsweise von Formschaumstoffen auf Polyurethanbasis mit integraler Dichteverteilung, deren Bildung in Formen abläuft, müssen entweder die Innenwände der Form mit sogenannten äußeren Trennmitteln oder die zum Polyurethan führenden Reaktionsgemische mit sogenannten inneren Trennmitteln versehen werden, um nach Beendigung der Reaktion leicht entformbare und formgetreue Werkstücke zu erhalten. Die Herstellung von Integralschaumstoffen unter Verwendung derartiger innerer Trennmittel ist beispielsweise in US—PS 3 726 952, GB—PS 1 365 215, US—PS 4 033 912, US—PS 4 024 090, US—PS 4 058 492, DE—OS 2 427 273, US—PS 4 098 371, GB—PS 1 420 293, DE—OS 2 319 648 oder DE—OS 3 012 126 beschrieben.

Bei Verwendung von äußeren Trennmitteln müssen die Formteile vor einer evtl. Lackierung sorgfältig von Trennmitteln befreit werden, um eine gute Haftung der Lackschicht zu erreichen. Auch bei Verwendung der in den beispielhaft genannten Literaturstellen erwähnten Trennmittel ist oft eine Nachbehandlung der Formteile vor der Lackierung erforderlich.

Ein anderes Prinzip der Herstellung von lackierten Formkunststoffen besteht darin, die Innenwände der zur Herstellung der Formkunststoffe verwendeten Form vor der Beschickung der Form mit einem sogenannten "Forminnenlack" zu beschichten ("in-mould-coating-Verfahren"). Hierbei war es bislang jedoch erforderlich, die Innenwände des Werkzeugs vor der Lackierung mit einem äußeren Trennmittel einzusprühen, um eine einwandfreie Entformbarkeit der mit einer Lackschicht versehenen Formkörper zu gewährleisten. Der Nachteil dieses Verfahrens ist darin zu sehen, daß vor jedem Arbeitsgang ein Besprühen der Forminnenwände mit dem Trennmittel erforderlich ist.

Es war daher die Aufgabe der Erfindung, neuartige Trennmittel zur Verfügung zu stellen, welche den Forminnenlacken vor der Lackierung der Innenwände der Form einverleibt werden können, so daß auch ohne Mitverwendung von äußeren Trennmitteln einwandfrei entformbare, mit einer Lackschicht versehene Formkunststoffe nach dem "in-mould-coating-Verfahren" zugänglich sind. Diese Aufgabe konnte überraschenderweise mit der nachstehend näher beschriebenen erfindungsgemäßen Verwendung gelöst werden. Die erfindungsgemäße Lösung der gestellten Aufgabe ist überraschend, da die in den vorgenannten Literaturstellen beschrieben, als innere Formtrennmittel für unlackierte Formkunststoffe auf Polyurethanbasis gut geeigneten inneren Trennmittel zur Lösung der erfindungsgemäßen Aufgabe weitgehend unbrauchbar sind. Es konnte daher nicht erwartet werden, daß die Lösung der gestellten Aufgabe mit den erfindungsgemäßen Trennmitteln möglich sein würde.

Gegenstand der Erfindung ist die

Verwendung von Polysiloxaneinheiten aufweisenden Polyisocyanat-Additionsprodukten, welche entweder durch Umsetzung von

a) mindestens zwei endständige Isocyanatgruppen aufweisende Umsetzungsprodukten von (i) im Sinne der Isocyanat-Additionsreaktion difunktionellen Polysiloxanen mit mindestens 2 Siloxaneinheiten der Formel $—O—Si(R)_2—$($R=C_1—C_4$-Alkyl- oder Phenylrest) und einem Molekulargewicht von 194 bis 20000 mit endständigen, gegenüber Isocyanatgruppen reaktionsfähigen Gruppen mit (ii) überschüssigen Mengen an organischen Polyisocyanaten mit

b) mindestens eine tertiäre Aminogruppe und/oder mindestens eine Oxyalkyleneinheit aufweisenden, im Sinne der Isocyanat-Additionsreaktion monofunktionellen aliphatischen Alkoholen und/oder primäre oder sekundären aliphatischen Aminen des Molekulargewichtsbereichs 75—5000 oder von

c) mindestens eine endständige Isocyanatgruppe aufweisende Umsetzungsprodukten, hergestellt durch Umsetzung von (iii) Verbindungen der unter b) genannten Art mit (iv) überschüssigen Mengen an organischen Polyisocyanaten und anschließender Entfernung des Polyisocyanatüberschusses mit

d) im Sinne der Isocyanat-Additionsreaktion difunktionellen Polysiloxanen mit endständigen, gegenüber Isocyanatgruppen reaktionsfähigen Gruppen hergestellt worden sind, als Trennmittel für Forminnenlacke bei der Herstellung von, mit einer Lackschicht versehenen, Formkunststoffen nach dem "in-mould-coating-Verfahren".

Ausgangsmaterialien für die Herstellung der erfindungsgemäßen Trennmittel sind

1. Im Sinne der Isocyanat-Additionsreaktion difunktionelle Polysiloxane mit endständigen, gegenüber Isocyanatgruppen reaktionsfähigen Gruppen;

2. organische Polyisocyanate und

3. mindestens eine tertiäre Aminogruppe und/oder mindestens eine Oxialkyleneinheit als Strukturelement enthaltende, im Sinne der Isocyanat-Additionsreaktion monofunktionelle, aliphatische Alkohole und/oder aliphatische primäre oder sekundäre Amine.

Bei den difunktionellen Polysiloxanen mit endständigen, gegenüber Isocyanatgruppen reaktionsfähigen Gruppen handelt es sich im Sinne der vorliegenden Erfindung um Verbindungen, welche neben endständig angeordneten, gegenüber Isocyanatgruppen reaktionsfähigen organofunktionellen Gruppen der nachstehend beispielhaft genannten Art Struktureinheiten der Formel $—O—Si(R)_2$- aufweisen, wobei in dieser Formel R für einen $C_1—C_4$-Alkyl- oder einen Phenylrest, vorzugsweise jedoch für einen Methylrest, steht. Erfindungsgemäß eignen sich als Ausgangsmaterialien sowohl die an sich bekannten, endständige

organofunktionelle Gruppen aufweisenden reinen Polysiloxane, als auch die an sich bekannten endständig organofunktionellen Siloxanpolyoxyalkylencopolymeren. Erfindungsgemäß als Ausgangsmaterial geeignete organofunktionelle, lineare Polysiloxane sind beispielsweise in den deutschen Auslegeschriften 1 114 632, 1 190 176, 1 248 287, 2 543 638 oder in den deutschen Offenlegungsschriften 2 356 692, 2 445 648, 2 363 452, 2 427 273 oder 2 558 523 beschrieben. Die organofunktionellen Endgruppen stellen vorzugsweise aliphatische, gegebenenfalls Heteroatome wie insbesondere Sauerstoff enthaltende Kohlenwasserstoffreste dar, die eine Hydroxyl-, Carboxyl-, Mercapto- oder primäre bzw. sekundäre Aminogruppe aufweisen. Zu den bevorzugten carbofunktionellen Gruppen gehören primäre und sekundäre Hydoxylgruppen, sowie sekundäre Aminogruppen. Besonders bevorzugt sind solche Ausgangsverbindungen, die endständig primäre Hydoxylgruppen aufweisen. Die organofunktionellen Gruppen können in den Ausgangsmaterialien beispielsweise in Form folgender carbofunktioneller Reste vorliegen: $—CH_2OH$, $—(CH_2)_4OH$, $—CH_2—O—CH_2—CH_2—OH$, $—CH_2—S—CH_2—CH_2—OH$, $—CH_2SH$, $—CH_2—S—CH_2—CH_2—SH$, $—CH_2—CH_2—COOH$, $—CH_2—NH_2$, $—(CH_2)_4NH_2$, $—CH_2—NH—C_4H_9$ oder $—CH_2—NH—C_6H_{11}$.

Die organofunktionellen Polysiloxane weisen mindestens 2, vorzugsweise 6 bis 30, Struktureinheiten der Formel $—O—Si(R)_2—$ bei einem Molekulargewicht von 194 bis 20 000, besonders bevorzugt zwischen 500 und 3000 auf. Wie bereits dargelegt, können in den erfindungsgemäß geeigneten Polysiloxanen in der Kette neben den genannten Struktureinheiten auch Polyoxyalkylen-, insbesondere Polyoxyethylen- und/oder Polyoxypropylen-Einheiten vorliegen. Die organofunktionellen Polysiloxane sind nach bekannten Verfahren zugänglich. Beispielsweise können die besonders geeigneten Hydroxymethylpolysiloxane durch direkte Umsetzung von Brommethylpolysiloxanen mit alkoholischer Kalilauge dargestellt werden. 4-Aminobutylpolysiloxane werden über die Hydrierung der leicht zugänglichen Nitrile hergestellt, entsprechende Carboxylderivate durch Verseifung der Cyanoalkylsiliciumverbindungen. Aminomethylsiloxane werden durch Aminierung der Halogenmethylsiliciumverbindungen mit Ammoniak oder primären Aminen gewonnen.

In vielen Fällen werden die funktionellen Gruppen zunächst an niedermolekularen Siloxanen eingeführt; die so gewonnenen Produkte werden dann durch die bekannte Äquilibrierungsreaktion in höhermolekulare Polysiloxane übergeführt.

Geeignete organofunktionelle Polysiloxane sind beispielsweise Verbindungen der Formel

$$H—X—Y—(Si(R)_2—O)_n—Si(R)_2—Y—X—H$$

in welcher

R die bereits obengenannte Bedeutung hat,

X für —O—, —NR'— (R'=aliphatischer oder cycloaliphatischer Kohlenwasserstoffrest mit bis zu 6 Kohlenstoffatomen), —S— oder —O—CO— steht,

Y für einen Alkylenrest mit 1 bis 4 Kohlenstoffatomen oder für einen durch Entfernung eines endständigen Sauerstoffatoms erhaltenen Oxyalkylen- bzw. Polyoxyalkylenrest (Alkylen=Ethylen und/oder Propylen) mit bis zu 50 Oxyalkylen-Einheiten steht und

n eine ganze Zahl zwischen 2 und 100, vorzugsweise 6 bis 30, bedeutet.

Erfindungsgemäß gut geeignete organofunktionelle Polysiloxane sind beispielsweise folgende Verbindungen:

$$HO—CH_2—Si(CH_3)_2—O[Si(CH_3)_2—O]_{12}—Si(CH_3)_2—CH_2OH$$

$$HO—\underset{\overset{|}{CH_3}}{CH}—CH_2—[Si(CH_2)_3—O]_{11}—Si(CH_3)_2—CH_2—O—\underset{\overset{|}{CH_3}}{CH}—CH_2—OH$$

$$HO—CH_2—Si(CH_3)_2—O—Si(CH_3)_2—CH_2—OH$$

$$HO—CH_2—Si(CH_3)_2—O—[Si(CH_3)_2—O]_{60}—Si(CH_3)_2—CH_2—OH$$

$$n\text{-}C_4H_9—NH—CH_2—Si(CH_3)_2—O—[Si(CH_3)_2—O]_{18}—\underset{\overset{|}{CH_2—NH—n\text{-}C_4H_9}}{Si(CH_3)_2}$$

oder

$$C_6H_{11}—NH—CH_2—\underset{CH_3}{\overset{CH_3}{Si}}—O—\left[\underset{CH_3}{\overset{CH_3}{Si}}—O\right]_{60}—\left(\underset{CH_2—NH—C_6H_{11}}{\overset{CH_3}{—Si—O—}}\right)_3—\underset{CH_2—NH—C_6H_{11}}{Si(CH_3)_2}$$

Die erfindungsgemäß besonders bevorzugten Organopolysiloxane entsprechen der allgemeinen Formel

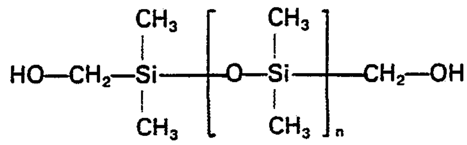 n=6 bis 30

Sie werden in an sich bekannter Weise durch Äquilibrierung von 1,1,3,3 - Tetramethyl - 1,3 - hydroxymethyldisiloxan der Formel

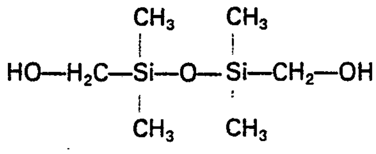

mit Octamethylcyclotetrasiloxan in Gegenwart von Schwefelsäure bzw. nach dem Verfahren der DE—AS 1 236 505 hergestellt.

Auch mit unterschüssigen Mengen an Diisocyanaten der nachstehend beispielhaft genannten Art kettenverlängerte, Urethangruppen aufweisende Polysiloxane mit endständigen, gegenüber NCO-Gruppen reaktionsfähigen Gruppen sind erfindungsgemäß als Aufbaukomponente (i) geeignet.

Als erfindungsgemäß einzusetzende Polyisocyanate (ii) kommen aliphatische, cycloaliphatische, araliphatische und aromatische Polyisocyanate in Betracht, wie sie z.B. von W. Siefken in Justus Liebigs Annalen der Chemie 562, Seiten 75 bis 136, beschrieben werden, beispielsweise Tetramethylendiisocyanat, Hexamethylendiisocyanat, 1 - Isocyanato - 3,3,5 - trimethyl - 5 - isocyanatomethyl - cyclohexan, Perhydro - 2,4'- und/oder -4,4' - diphenylmethan - diisocyanat, 2,4- und 2,6 - Toluylendiisocyanat sowie beliebige Gemische dieser Isomeren, Diphenylmethan - 2,4'- und/oder -4,4' - diisocyanat, Naphthylen - 1,5 - diisocyanat, sowie Polyphenyl-polymethylen-polyisocyanate, wie sie durch Anilin-Formaldehyd-Kondensation und anschließende Phosgenierung erhalten und z.B. in den britischen Patentschriften 874 430 und 848 671 beschrieben werden. Verwendung finden können auch modifizierte Isocyanate wie Carbodiimid-, Allophanat- und Isocyanuratgruppen enthaltende Polyisocyanate.

Bevorzugt werden in der Regel die technisch leicht zugänglichen Polyisocyanate eingesetzt, z.B. das 2,4- und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließende Phosgenierung hergestellt werden (MDI), 1,6 - Hexamethylendiisocyanat, 1 - Isocyanato - 3,3,5 - trimethyl - 5 - isocyanatomethyl - cyclohexan (IPDI). IPDI ist besonders bevorzugt.

Bei den oben unter (iii) genannten, im Sinne der Isocyanat - Additionsreaktion monofunktionellen Ausgangsmaterialien für das erfindungsgemäße Verfahren, handelt es sich um Verbindungen, die neben einer aliphatische gebundenen primären oder sekundären Hydroxylgruppe bzw. neben einer aliphatisch gebundenen primären oder sekundären Aminogruppe mindestens 1 tertiäres Stickstoffatom und/oder mindestens eine Oxyalkyleneinheit mit 2 bis 4 Kohlenstoffatomen aufweisen. Diese Verbindungen weisen ein zwischen 75 und 5000 liegendes Molekulargewicht auf. Besonders gut geeignet sind tertiäre Aminogruppen und/oder zusätzlich gegebenenfalls Oxyalkyleneinheiten aufweisende, primäre oder sekundäre aliphatische Alkohole oder primäre oder sekundäre aliphatische Amine des Molekulargewichtsbereichs 75—400 bzw. stickstofffreie oder tertiären Stickstoff aufweisende, einwertige Polyetheralkohole des Molekulargewichtsbereichs 400 bis 3000. Die Herstellung der Oxalkyleneinheiten aufweisenden Verbindungen geschieht in an sich bekannter Weise durch Alkoxylierung geeigneter Startermoleküle, wobei zur Alkoxylierung vorzugsweise Ethylenoxid und/oder Propylenoxid eingesetzt wird. Auch die Verwendung von Tetramethylenether-Einheiten aufweisenden Verbindungen ist möglich.

Typische Beispiele geeigneter, tertiären Stickstoff und/oder Oxalkyleneinheiten aufweisender Aufbaukomponenten 3) für das erfindungsgemäße Verfahren sind:

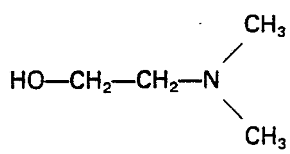

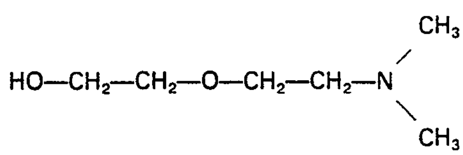

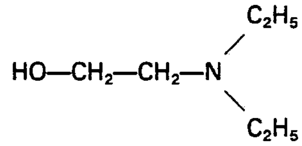

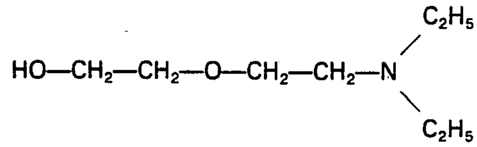

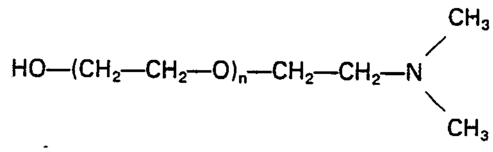

mit n=2 bis 100

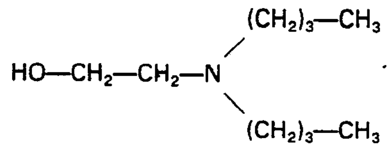

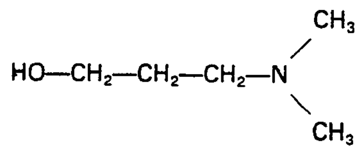

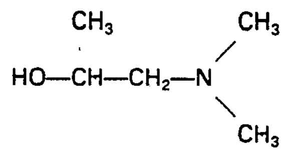

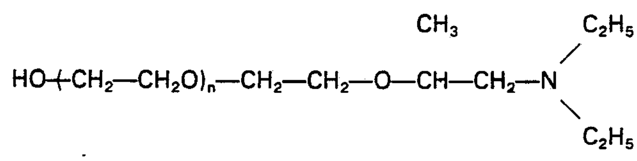

(n=1 bis 100)

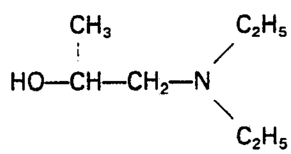

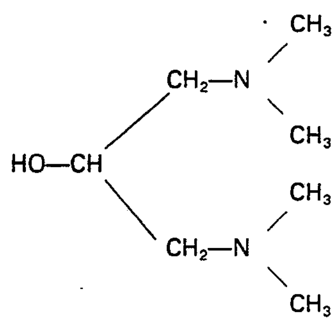

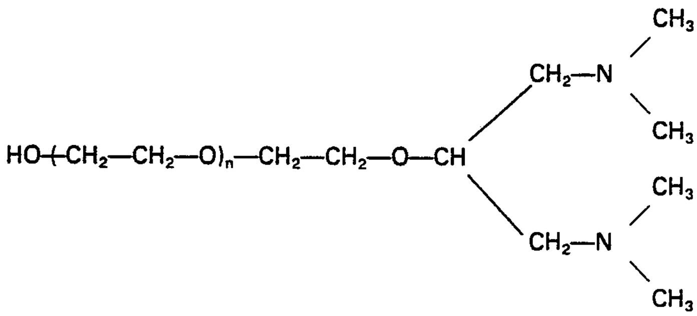

mit n=1 bis 100

$HO—CH_2—CH_2—(O—CH_2—CH_2)_n—O—CH_3$

$HO—CH_2—CH_2—(O—CH_2—CH_2)_n—O—C_2H_5$

$HO—CH_2—CH_2—(O—CH_2—CH_2)_n—O—C_3H_7$

$HO—CH_2—CH_2—(O—CH_2—CH_2)_n—O—C_5H_{11}$ (n=1 bis 100)

$HO—CH_2—CH_2—OCH_3$

$HO—CH_2—CH_2—(O—CH_2—CH_2)_n—OC_4H_9$ mit n=1 bis 100

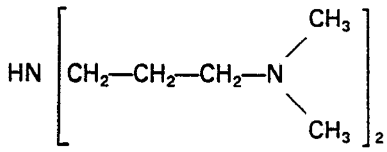

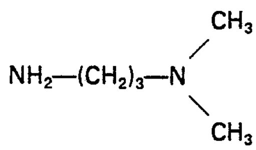

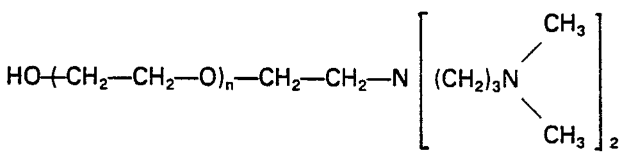

mit n=1 bis 100

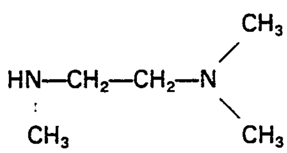

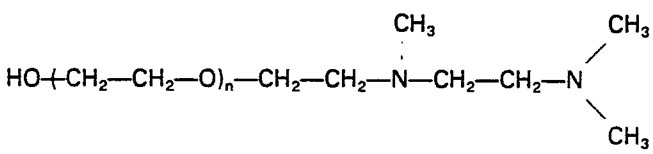

mit n gleich 1 bis 100

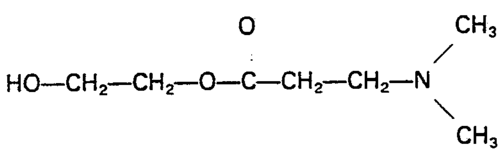

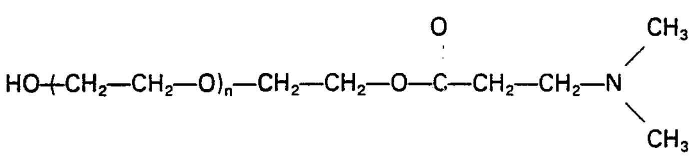

mit n gleich 1 bis 100

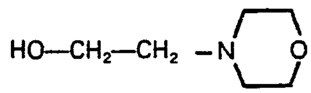

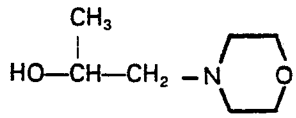

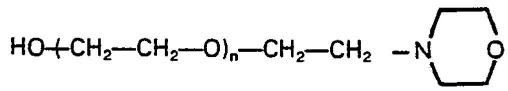 mit n gleich 1 bis 100

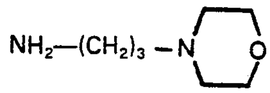

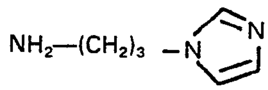

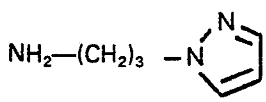

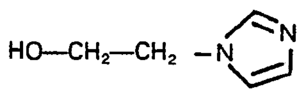

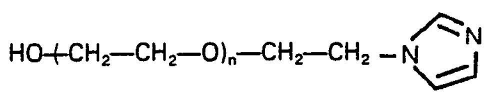 mit n gleich 1 bis 100

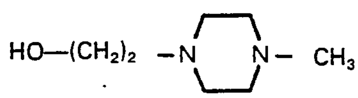

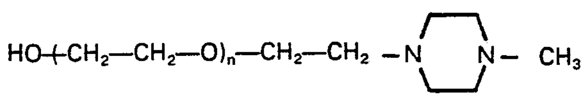 mit n gleich 1 bis 100

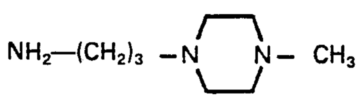

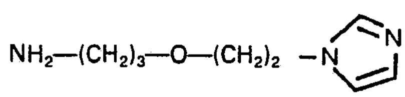

$NH_2-(CH_2)_2-OCH_3$

$CH_3$

$NH-(CH_2)_3-O-CH_3$

$CH_3$

$H(O-CH_2-CH_2)_nN-(CH_2)_3-OCH_3$ mit n gleich 1 bis 100.

Bei der Herstellung der erfindungsgemäß verwendeten Trennmittel wird im allgemeinen die Polysiloxan-Komponente (i) in einem ersten Reaktionsschritt mit überschüssigen Mengen an organischen Polyisocyanaten (ii) zu den entsprechenden NCO-Präpolymeren umgesetzt. Hierbei werden die Oganopolysiloxane mit den Polyisocyanaten in einem Äquivalentverhältnis zwischen NCO-Gruppen und gegenüber Isocyanatgruppen reaktionsfähigen Gruppen von vorzugsweise 1,2:1 bis 4:1, besonders bevorzugt 1,5:1 bis 3:1 zur Reaktion gebracht. Die Umsetzung erfolgt vorzugsweise im Temperaturbereich zwischen 30 und 100°C, gegebenenfalls unter Mitverwendung geeigneter Katalysatoren wie z.B. zinnorganische Verbindungen, wie Zinn-(II)-acetat, Zinn-(II)-octoat oder Dibutyl-zinndiacetat.

Gegebenenfalls eingesetzte überschüssige Mengen an Polyisocyanaten können gegebenenfalls vor der nächsten Reaktionsstufe durch Dünnschichtdestillation entfernt werden. Es ist jedoch auch möglich, einen gegebenenfalls vorliegenden Überschuß an nicht-umgesetztem Polyisocyanat im Reaktionsgemisch zu belassen und dieses Gemisch der nächsten Reaktionsstufe zuzuführen, eine Arbeitsweise, die allerdings weniger bevorzugt ist.

Die nächste Reaktionsstufe besteht in der Umsetzung der NCO-Präpolymeren mit den unter (iii) genannten Aufbaukomponenten. Vorzugsweise werden hierbei die Reaktionspartner in solchen Mengen eingesetzt, daß für jede Isocyanatgruppe der vorab hergestellten NCO-Präpolymeren 0,8 bis 1,2 vorzugsweise 1,0 alkoholische Hydroxylgruppen bzw. primäre oder sekundäre Aminogruppen der Komponente (iii) zur Verfügung stehen. Die Umsetzung erfolgt im allgemeinen im Temperaturbereich zwischen 30 und 100°C, gegebenenfalls unter Mitverwendung der bereits oben beispielhaft genannten, die Isocyanat-Additionsreaktion beschleunigenden Katalysatoren. Die einzelnen Reaktionsschritte können selbstverständlich auch unter Mitverwendung geeigneter Lösungsmittel, beispielsweise geeigneter Lacklösungsmittel, durchgeführt werden, so daß beispielsweise Lösungen der erfindungsgemäßen Trennmittel in Lacklösungsmitteln anfallen, wie sie ohnehin für die Forminnenlacke Verwendung finden.

Es ist grundsätzlich auch möglich, bei der Herstellung der erfindungsgemäßen Trennmittel die Reaktionspartner in einer anderen Reihenfolge miteinander zur Umsetzung zu bringen, und zwar dergestalt, daß man zunächst in einem ersten Reaktionsschritt aus der unter (iii) beispielhaft genannten Aufbaukomponente mit gegenüber Isocyanatgruppen reaktionsfähigen Wasserstoffatomen und dem Polyisocyanat (ii) ein Isocyanatgruppen aufweisendes Umsetzungsprodukt herstellt, welches anschließend mit der Polysiloxankomponente (i) zur Reaktion gebracht wird. Hierbei geht man zweckmäßigerweise so vor, daß man die Komponente (iii) mit einem hohen Überschuß der Polyisocyanatkomponente (ii) zur Reaktion bringt und anschließend den Überschuß des nichtumgesetzten Polyisocyanats beispielsweise durch Dünnschichtdestillation entfernt. Das so erhaltene Isocyanatgruppen aufweisende Umsetzungsprodukt wird anschließend mit der Polysiloxankomponente (i) zur Reaktion gebracht, wobei vorzugsweise ein Äquivalentverhältnis zwischen Isocyanatgruppen und gegenüber Isocyanatgruppen reaktionsfähigen Gruppen von 0,9:1 bis 1,1:1, vorzugsweise 1:1, eingehalten wird.

Auch bei dieser weniger bevorzugten Variante können die an sich bekannten, oben beispielhaft erwähnten, Katalysatoren mitverwendet werden. Auch bei dieser Variante liegen die Reaktionstemperaturen im allgemeinen im Bereich von 30 bis 100°C. Diese 2. Variante ist im Vergleich zur 1. Variante weniger bevorzugt und im allgemeinen auf den Einsatz von Hydroxylgruppen aufweisenden Aufbaukomponenten (iii) beschränkt.

Die Verfahrensprodukte stellen wirksame innere Trennmittel für "in-mould-coating-Lacke" dar, was insofern überraschend ist, als die bekannten Formtrennmittel des Standes der Technik für dieses spezielle Einsatzgebiet weitgehend unbrauchbar sind. Dies gilt auch für die konstitutionell verwandten, Hydroxylgruppen aufweisenden Trennmittel der DE—OS 3 012 126, die in vergleichbaren Konzentrationsbereichen den erfindungsgemäßen Trennmitteln deutlich unterlegen sind. Auch die Konstitution der Umsetzungsprodukte ist für ihre Wirksamkeit von entscheidender Bedeutung. Ersetzt man nämlich Ether oder tertiäre Aminogruppen enthaltende Umsetzungsprodukte durch entsprechende Verbindungen, die keine Ether- und/oder tertiäre Aminogruppen aufweisen, so ist dies mit einem merklichen Abfall der Wirksamkeit verbunden. Auch die als Ausgangsmaterialien eingesetzten Siloxane selbst zeigen keine merkliche Trennwirkung. Die Trennmittel des Standes der Technik, wie sie beispielsweise in DE—OS 1 953 637, 2 121 670 oder 2 427 273 beschrieben sind, zeigen bei einer Verwendung als Trennmittel in Forminnenlacken der erfindungsgemäßen Art zwar auch eine gewisse Trennwirkung, sind jedoch mit dem Nachteil behaftet, aus der Lackschicht des Formkörpers auszuschwitzen, was in der Regel zu klebrigen Oberflächen führt.

Die erfindungsgemäß verwendeten Trennmittel werden Forminnenlacken in Mengen von 0,1 bis 50, vorzugsweise 2,5 bis 20 Gew.-%, bezogen auf Lackbindemittel, zugesetzt.

Die erfindungsgemäßen verwendeten Trennmittel eignen sich als Trennmittel für Forminnenlacke der unterschiedlichsten Art. So können sie beispielsweise physikalisch trocknenden Einkomponenten-Polyurethanlacken ebensogut zugesetzt werden wie Zweikomponenten-Polyurethanlacken, die als Bindemittel mindestens ein organische Polyisocyanat und mindestens eine Polyhydroxylverbindung enthalten, sie eignen sich ferner z.B. für Lacke auf Acrylatbasis oder solchen auf Basis von Nitrozellulose. Die Mitverwendung der in der Lacktechnologie üblichen Hilfs- und Zusatzmittel wird durch den Einsatz der erfindungsgemäßen Trennmittel nicht beeinträchtigt.

Die erfindungsgemäße Verwendung eignet sich insbesondere zur Herstellung von, mit einer Lackschicht versehenen, geschäumten oder nicht-geschäumten Formkunststoffen auf Polyurethanbasis, insbesondere zur Herstellung von halbharten bis harten Integralschaumstoffen, sowie von Füllschaumstoffen.

Bei der Herstellung derartiger, mit einer Lackschicht versehener Formkörper, werden die Innenwände vor der Befüllung mit dem zum Kunststoff ausreagierenden Reaktionsgemisch mit dem, das erfindungsgemäße Trennmittel enthaltenden Forminnenlack lackiert, worauf sich nach Antrocknen der Lackschicht die Befüllung der Form anschließt.

Erfindungsgemäß können so mit einer Lackschicht versehene Fahrrad- und Motorradsättel, Lenkräder, Autoinnengriffe, äußere und innere Türverkleidungen, Armaturverkleidungen, Armlehnen, Nackenstützen,

Holmverkleidungen, Zierleisten oder andere Formkörper auf Kunststoffbasis, insbesondere auf Basis von halbharten bis harten Polyurethanschaumstoffen, hergestellt werden.

In den nachfolgenden Beispielen beziehen sich alle Prozentangaben auf Gewichtsprozente und alle Angaben in "Teilen" (abgek. Tl.) auf Gewichtsteile.

A) Herstellung der Trennmittel

Beispiel 1

In 1140 g (1 Mol) α,ω-Bishydroxymethyl - polydimethylsiloxan eines OH-Gehaltes von 3,0% werden 333 g (1,5 Mol) 1 - Isocyanato - methyl - 5 - isocyanato - 1,3,3 - trimethylcyclohexan getropft; man erwärmt auf 50°C, bis das Prepolymer einen NCO-Gehalt von 3,2% erreicht hat, kühlt auf 10°C ab und fügt unter Rühren 187 g Bis(dimethylaminopropyl)-amin zu und beläßt für ca. 3 Stunden auf 80°C, wonach dann kein NCO mehr nachweisbar ist. Man erhält einen wasserhellen Siloxan-Urethan-Harnstoff der Viskosität bei 25°C von 22 400 mPa . s.

Beispiel 2

In 1140 g (1 Mol) α,ω-Bishydroxymethyl - polydimethylsiloxan eines OH-Gehaltes von 3,0% werden 333 g (1,5 Mol) 1 - Isocyanatomethyl - 5 - isocyanato - 1,3,3 - trimethylcyclohexan getropft; nach 3 Stunden bei 90°C ist ein NCO-Gehalt von 2,9% erreicht. In 146 g des Prepolymers fügt man bei 50°C 8,75 g Dimethylaminoethanol zu, wonach man auf 80°C hält, bis sich kein NCO mehr nachweisen läßt.

Man erhält ein wasserhelles Siloxan-Urethan der Viskosität 17 500 mPa . s bei 25°C.

Beispiel 3

In 600 g des Prepolymers gemäß Beispiel 2 werden 880 g eines Ethylenoxid-Adduktes an n-Butanol der OH-Zahl von 28 zugefügt und mit 1000 ml Dimethylformamid homogenisiert. Nach 10 Stunden bei 80°C ist kein NCO mehr nachweisbar; nach dem Einengen und Ausgießen erhält man einen kristallin erstarrenden farblosen Festkörper, der in den üblichen Lacklösungsmitteln gut löslich ist und einen Erweichungspunkt von 50°C hat.

Beispiel 4

In 200 g des Prepolymers gemäß Beispiel 2 werden 22,7 g 2 - (2 - Dimethylamino - ethoxy) - ethanol zugefügt und für 9 Stunden auf 80°C gehalten, wonach kein NCO mehr nachweisbar ist.

Man erhält ein farbloses Siloxan-Urethan der Viskosität 13 000 mPa . s bei 25°C.

Beispiel 5

In 1135 g (1 Mol) α,ω-Dihydroxymethyl-polydimethylsiloxan eines OH-Gehaltes von 3,0% werden 444 g (2 Mol) 1 - Isocyanatomethyl - 5 - isocyanato - 1,3,3 - trimethylcyclohexan getropft. Nach 2 Stunden bei 70°C ist ein NCO-Gehalt von 5,5% erreicht.

300 g dieses Prepolymers werden bei 50°C mit 35 g 2-Dimethylaminoethanol versetzt und 6 Stunden auf 80°C gehalten, wonach kein NCO mehr nachweisbar ist; Viskosität bei 50°C 2020 mPa . s.

Beispiel 6

300 g des Prepolymers gemäß Beispiel 5 werden auf 10°C gekühlt und mit 73 g Bis-(dimethylaminopropyl)-amin versetzt; nach 6 Stunden 90°C ist kein NCO mehr nachweisbar; Viskosität bei 50°C 4000 mPa . s.

Beispiel 7

300 g Prepolymer nach Beispiel 5 werden bei 50°C mit 61,5 g 2 - (2 - Dimethylamino - ethoxy) - ethanol versetzt und 6 Stunden auf 90°C gehalten, wonach kein NCO mehr nachweisbar ist; Viskosität bei 50°C 1650 mPa . s.

Beispiel 8

59 g Prepolymer gemäß Beispiel 5 werden mit 155 g eines Ethylenoxid-Adduktes an n-Butanol der OH-Zahl 28 und 150 ml Dimethylformamid werden 20 Stunden auf 90°C erhitzt, wonach kein NCO mehr nachweisbar ist; man engt ein und erhält nach Erstarren einen Festkörper—vom Schmelzpunkt 50°C—der z.B. in Diethylenglykolmonomethylester als 50 %ige Lösung verarbeitet werden kann.

Beispiel 9

300 g Prepolymer gemäß Beispiel 5 werden bei 50°C mit 45,8 g 2-Diethylaminoethanol versetzt und 6 Stunden auf 90°C gehalten, wonach kein NCO mehr nachzuweisen ist; Viskosität bei 50°C 1650 mPa . s.

Beispiel 10

680 g (1,2 Mol) α,ω-Dihydroxymethyl-polydimethylsiloxan eines OH-Gehaltes von 6,0% werden 502 g (2,4 Mol) 1 - Isocyanatomethyl - 5 - isocyanato - 1,3,3 - trimethylcyclohexan getropft; man hält 2 Stunden auf 70°C und erhält ein Prepolymer mit einem NCO-Gehalt von 7,6%. 200 g dieses Prepolymers werden bei 50°C mit 32,4 g Dimethylaminoethanol versetzt und 6 Stunden auf 90°C gehalten, wonach kein NCO mehr nachweisbar ist; Viskosität bei 50°C 16 500 mPa . s.

Beispiel 11

200 g des Prepolymers nach Beispiel 10 werden auf 10°C gekühlt und mit 68,2 g Bis - (dimethylaminopropyl)-amin versetzt; nach 5 Stunden bei 80°C ist kein NCO mehr nachweisbar; Viskosität bei 50°C 52 000 mPa . s.

Beispiel 12

200 g des Prepolymers nach Beispiel 10 werden bei 50°C mit 37,5 g 2 - (2 - Dimethylamino - ethoxy) - ethanol versetzt und 5 Stunden auf 80°C gehalten, wonach kein NCO mehr nachweisbar ist; Viskosität bei 50°C 4450 mPa . s.

Beispiel 13

200 g des Prepolymers von Beispiel 10 werden bei 50°C mit 42,8 g Diethylaminoethanol versetzt und für 6 Stunden auf 80°C gehalten, wonach kein NCO mehr nachweisbar ist; Viskosität bei 50°C 9200 mPa . s.

Beispiel 14

30 g des Prepolymers von Beispiel 10 werden bei 50°C mit 110 g eines Ethylenoxid-Adduktes von n-Butanol der OH-Zahl 28 und 150 ml Dimethylformamid werden für 20 Stunden auf 80°C erhitzt, wonach kein NCO mehr nachweisbar ist. Man engt ein, gießt aus und erhält ein sofort kristallisierendes Produkt vom Schmelzpunkt 80°C, das in Diethylenglykolmonomethylester löslich ist.

Beispiel 15

1245 g (2,2 Mol) α,ω-Bis - hydroxymethyl - polydimethylsiloxan mit einem OH-Gehalt von 6,0% werden mit 733 g (3,3 Mol) 1 - Isocyanatomethyl - 5 - isocyanato - 1,3,3 - trimethylcyclohexan versetzt; nach 2 Stunden bei 70°C ist ein NCO-Gehalt von 4,4% erreicht.

300 g dieses Prepolymers werden bei 50°C mit 27,8 g Dimethylaminoethanol versetzt und für 8 Stunden auf 80°C gehalten, wonach kein NCo mehr nachweisbar ist. Man erhält ein Produkt der Viskosität 13 200 mPa . s bei 80°C.

Beispiel 16

300 g des Prepolymers von Beispiel 15 werden auf 10°C gekühlt und mit 58 g Bis - (dimethyl-aminopropyl) - amin versetzt, man läßt für 6 Stunden auf 80°C und erhält einen Siloxan-Urethan-Harnstoff der Viskosität 29 500 mPa . s bei 50°C.

Beispiel 17

300 g des Prepolymers von Beispiel 15 werden bei 50°C mit 48,5 g 2 - (2 - Dimethylaminoethylethoxy) - ethanol versetzt und 6 Stunden auf 80°C gehalten, wonach kein NCO mehr nachzuweisen ist; man erhält ein Produkt der Viskosität 5600 mPa . s bei 50°C.

Beispiel 18

74 g des Prepolymers nach Beispiel 15 werden bei 50°C mit 155 g eines Ethylenoxid-Adduktes an n-Butanol der OH-Zahl 28 und 150 ml Dimethylformamid versetzt und 20 Stunden auf 80°C gehalten, wonach kein NCO mehr nachweisbar ist; man engt ein und erhält ein bald kristallisierendes Produkt vom Schmelzpunkt 60°C.

Beispiel 19

140 g des Prepolymers nach Beispiel 2 werden mit 23,5 g eines Ethylenoxid-Adduktes an n-Butanol einer OH-Zahl von 22,5 in 250 ml Toluol auf 80°C erwärmt, bis kein NCO mehr nachweisbar ist; man engt ein und erhält ein Urethan-Siloxan der Viskosität 7300 mPa . s bei 25°C.

Beispiel 20

200 g des Prepolymers nach Beispiel 2 werden mit 15 g Dimethylamino-propylamin bei 10°C unter Kühlung versetzt, anschließend wird bei 50°C nachgerührt, bis kein NCO mehr nachweisbar ist. Man erhält einen Urethan-Siloxan-Harnstoff der Viskosität 38 800 mPa . s bei 50°C.

Beispiel 21

500 g des Prepolymers nach Beispiel 2 werden mit 267 g eines Ethylenoxid-Adduktes an n-Butanol einer OH-Zahl von 80 auf 80°C erwärmt, bis kein NCO mehr nachweisbar ist; man erhält ein Urethan-Siloxan der Viskosität 5240 mPa . s bei 25°C.

Beispiel 22

400 g des Prepolymeren gemäß Beispiel 2 werden auf 10°C gekühlt und dann mit 35,4 g 3 - (3 - aminopropyl) - imidazol versetzt, wobei die Temperatur auf 50—60°C ansteigt. Man hält auf 70°C bis kein NCO mehr nachweisbar ist. Man erhält einen Urethan-Siloxan-Harnstoff der Viskosität 12 800 mPa . s/80°C.

B) Lackrezepturen

1. Der spritzfertig eingestellte Einkomponentenlack setzt sich aus

3,7 Tl. eines handelsüblichen linearen Polyurethan-Polyharnstoffs (Desmolac® 4125 der Bayer AG, Leverkusen),
27,6 Tl. einer 10 %igen Lösung eines teilverseiften Copolymerisats aus Polyvinylchlorid und Polyvinylacetat mit einem Hydroxylgehalt von 2%;
8,9 Tl. Butylacetat,
16,1 Tl. Xylol,
19,5 Tl. Butanol,
3,5 Tl. Cyclohexanon,
8,9 Tl. Diacetonalkohol und
11,8 Tl. einer mit organischem Rot-Pigment gefüllten handelsüblichen Farbpaste,

zusammen.

2. Der spritzfertig eingestellte Zweikomponenten-Lack besteht aus

5,8 Tl. eines aliphatischen Polyesterdiols mit einem OH-Gehalt von 5,2%, hergestellt durch Veresterung von 0,9 Mol Adipinsäure, 0,01 Mol Maleinsäureanhydrid, 0,09 Mol Phthalsäureanhydrid, 0,3 Mol Trimethylolpropan und 1,13 Mol 1,2-Dihydroxypropan;
1,6 Tl. eines aliphatischen Polyesterdiols mit einem OH-Gehalt von 1,8%, hergestellt durch Veresterung von 1 Mol Adipinsäure mit 1,05 Mol Diethylenglykol und 0,07 Mol Trimethylolpropan;
8,6 Tl. einer 20 %igen Lösung eines teilverseiften Copolymerisates aus Polyvinylchlorid und Polyvinylacetat des OH-Gehalts 2% in Methylethylketon;
53 Tl. eines Lösungsmittelgemisches aus Methylethylketon/Toluol/Ethylenglykolacetat/Butylacetat (4:1:4:1);
6,1 Tl. eines anorganischen Pigmentes, sowie
11,9 Tl. einer 60-%igen Lösung in Butylacetat eines Isocyanuratgruppen aufweisenden Polyisocyanats, welches durch Mischtrimerisation von 2,4-Diisocyanatotoluol mit Hexamethylendiisocyanat im Molverhältnis 3:2 hergestellt wurde, mit einem NCO-Gehalt der Lösung von 10,5%.

3. Der spritzfertig eingestellte Grundierungs-Lack setzt sich aus

17,5 Tl. des physikalisch trocknenden Polyurethan-Polyharnstoffs gemäß Rezeptur 1;
28,2 Tl. des Copolymerisats gemäß Rezeptur 1;
9,1 Tl. Butylacetat;
16,5 Tl. Xylol;
19,9 Tl. Butanol;
3,5 Tl. Cyclohexanon;
4,5 Tl. Titandioxid-Pigment (Rutil);
1,5 Tl. Talkum;
2,0 Tl. des Pigmentes® Efèko schwarz NC 18/2 der Firma Degussa als 20 %ige Lösung in Ethylglykolacetat

zusammen.

4. Der spritzfertig eingestellte Acrylat-Lack besteht aus

10 Tl. des Polymethylmethacrylates® Paraloid B 48 N der Firma Röhm und Haas;
90 Tl. eines Lösungsmittelgemisches aus Toluol/Diacetonalkohol/Isopropanol (1:1:1);
18 Tl. einer mit organischem Rot-Pigment gefüllten handelsüblichen Farbpaste.

5. Der spritzfertig eingestellte Lack auf Basis eines Copolymerisates besteht aus

5 Tl. eines Copolymerisates aus 91% Polyvinylchlorid; 3% Polyvinylalkohol und 6% Polyvinylacetat;
95 Tl. eines Lösungsmittelgemisches aus Toluol/Diacetonalkohol/Isopropanol (1:1:1);
18 Tl. einer mit organischem Rot-Pigment gefüllten handelsüblichen Farbpaste.

6. Der spritzfertig eingestellte Lack aus Basis Nitrozellulose besteht aus

25,7 Tl. eines Fettsäure-modifizierten Phthalatharzes (Alkydal RD 181® der Bayer AG) 75% in Xylol,
1,5 Tl. des Keton-Aldehyd-Kondensationsharzes SK der Chem. Werke Hüls, 50 %ig in Butylacetat,
1,4 Tl. Dibutylphthalat,
1,4 Tl. Benzylbutylphthalat,
14,1 Tl. mittelviskoser Nitrozellulose (NC-Wolle E 620 der Firma Wolff-Walsrode),
12,4 Tl. einer mit Titandioxid (Rutil) gefüllten, handelsüblichen Pigmentpaste;

10,6 Tl. Butylacetat,
6,9 Tl. Ethylacetat,
5,3 Tl. Ethylglykol,
2,9 Tl. Butanol,
16,6 Tl. Xylol.

7. Der spritzfertig eingestellte Zweikomponentenlack auf Basis eines Acrylats setzt sich aus

200 Tl. eines Copolymers mit einem OH-Gehalt von 2% aus Methacrylsäuremethylester, Methacrylsäure-2-hydroxyethylester, 2-Ethylhexylacrylat und Acrylsäure als 50 %ige Lösung in Xylol/Ethylenglykolacetate (1:1),
200 Tl. einer 20 %igen Lösung von Zelluloseacetobutyrat in Ethylenglykolacetat,
132 Tl. Ethylenglykolacetat,
132 Tl. Ethylacetat,
1,2 Tl. Zinkoctoat (10 %ige Lösung in Toluol),
7,4 Tl. Pigment Spezialschwarz IV der Fa. Degussa,
12,4 Tl. Mattierungsmittel OK 412 der Fa. Degussa,
30 Tl. einer 75 %igen Lösung in Ethylglykolacetat/Xylol (1:1) eines Biuretgruppen aufweisenden Polyisocyanats aus Basis von Hexamethylendiisocyanat, mit einem NCO-Gehalt der Lösung von 14%.

C) Verwendungsbeispiele

In den nachfolgenden Verwendungsbeispielen werden die Lackrezepturen 1—7 mit den in den Beispielen 1—21 beschriebenen Trennmitteln, wie nachstehend beschrieben, kombiniert. In den Vergleichsbeispielen wurden Trennmittel des Standes der Technik verwendet.

Die verwendeten Formen werden mit den mit den Trennmitteln versehenen Lacken kunststoffseitig eingesprüht. Die Lacke werden hierbei in einer solchen Menge eingesetzt, daß Trockenfilmstärken von ca. 0,03 bis 0,05 mm resultieren. Äußere Trennmittel werden nicht verwendet. Die Befüllung der Formen mit dem zum Kunststoff ausreagierenden Reaktionsgemisch erfolgte, sobald die Lacke eine nichtklebrige Oberflächenbeschaffenheit aufwiesen. Der Auftrag der Lacke erfolgte mit Druckluftpistolen, die Verarbeitung der zum Kunststoff ausreagierenden Rezepturen mit Verdüsungsmaschinen, die nach dem Prinzip der Gegenstrominjektion arbeiten (HK-Maschinen, Maschinenfabrik Hennecke GmbH, 5205 Skt. Augustin).

Die Haftung der Lacke auf den Formkörpern wird nach folgender Methode überprüft: Mit einem Federmesser wird auf einer Fläche von 1 $cm^2$ ein Schnittgitter mit einem Schnittabstand von 1 mm eingezogen. Anschließend wird ein Klebestreifen auf die angeschnittene Fläche gedrückt und wieder abgezogen. Dabei wird der Lack je nach Haftvermögen abgezogen, wobei die Flächenanteile zwischen haftender und entfernter Lackschicht zur Beurteilung der Lackhaftung herangezogen werden.

Die Abriebfestigkeit wird im Crockmetertest in Anlehnung an DIN 5402 überprüft.

Verwendungsbeispiel 1 (Fahrradsättel)

Form:

Form für einen Fahrradsattel mit strukturierter Innenfläche aus Epoxidharz, Formtemperatur 45°C.

Lack:

Gemäß B 1), in Abmischung mit 10%, bezogen auf Bindemittel, des Trennmittels A 19). Zur Herstellung dieser Mischung wurden vorab 1,4 Teile des Trennmittels in 5 Teilen Toluol gelöst.

Die saubere, fettfreie Innenfläche der Form wird mit dem Lack beschichtet. Nach einer Antrocknungszeit von ca. 45 Sekunden, nach welcher ein nicht-klebriger Lackfilm der Schichtdicke 0,03 mm resultierte, wird die Form in an sich bekannter Weise unter Verwendung eines Zwei-kompontenten-Gemischs ausgeschäumt.

Die Polyolkomponente des Gemischs bestand aus:

100 Tl. eines trifunktionellen Polyetherpolyols der OH-Zahl 35, welches durch Alkoxylierung von Trimethylolpropan unter Verwendung von Propylenoxid und anschließendem Aufpfropfen von ca. 15%, bezogen auf die Gesamtmenge an Alkylenoxid an Ethylenoxid hergestellt worden war,
9 Tl. Ethylenglykol,
0,4 Tl. Diazabicyclooctan (33 %ig in Diisopropanol) und
14 Tl. Tirchlorofluoromethan.

Die Polyisocyanatkomponente bestand aus 43 Tl. eines mit Dipropylenglykol modifizierten Polyisocyanatgemischs der Diphenylmethanreihe mit einem NCO-Gehalt von 28% und einer Viskosität bei 25°C von 130 mPa . s.

Die Menge des schäumfähigen Gemischs wurde so bemessen, daß ein Formteil einer Rohdichte von 300 $g/cm^3$ resultierte. Nach einer Reaktionszeit für das schäumfähige Gemisch von 4 Minuten kann das mit einer Lackschicht versehene Formteil der Form entnommen werden. Die Oberfläche ist frei von Störungen

und klebfrei. Auf diese Weise wurden insgesamt 30 Fahrradsättel hergestellt, ohne jegliche Probleme bei der Entformung.

| | | |
|---|---|---|
| Lackhaftung: | 1. Sattel: gut; | 30. Sattel: gut |
| Crockmetertest: | gut (trocken) | gut (trocken) |
| | gut (naß) | gut (naß) |

Verwendungsbeispiel 2 (PKW-Lenkräder)

Formwerkzeug aus Metall mit strukturierter Oberfläche, Temperatur 45°C; Lack: Einkomponentenlack nach B/1 mit 1,4 Tl. Trennmittel gemäß Beispiel A/21, entsprechend 10% bezogen auf Bindemittel.

Die saubere, fettfreie Form wird direkt mit dem selbsttrennenden Lack (Trockenfilmdicke: 0,03 mm) beschichtet und analog Verwendungsbeispiel 1 ausgeschäumt. Nach einer Reaktionszeit von 4 Minuten kann das lackierte Teil der Rohdichte 300 g/cm$^3$ entnommen werden; die Entformung an allen Stücken ist einwandfrei möglich. Die Oberfläche zeigt keine Störungen und klebt nicht.

| | | |
|---|---|---|
| Lackhaftung: | 1. Lenkrad: gut; | 30. Lenkrad: gut |
| Crockmetertest: | gut (trocken) | gut (trocken) |
| | gut (naß) | gut (naß) |

Verwendungsbeispiel 3 (Holmverkleidungen)

Form aus Epoxidharz mit strukturierter Oberfläche; Temperatur 40°C.

Lack: Einkomponentenlack nach B/1 mit 1,4 Tl. Trennmittel gemäß Beispiel A/21, in 5 Tl. Toluol gelöst, entsprechend 10% bezogen auf Bindemittel (Trockenfilmdicke: 0,03 mm). Nach ca. 45 Sekunden wird folgender Füllschaum in die Form eingetragen: 100 Tl. eines trifunktionellen Polyetherpolyols der OH-Zahl 28, hergestellt durch Propoxylierung von Trimethylolpropan und anschließendem Aufpfropfen von ca. 15%, bezogen auf Gesamtmenge an Alkylenoxiden, an Ethylenoxid,

10 Tl. propoxyliertes Trimethylolpropan der OH-Zahl 530,
0,2 Tl. Diazabicyclooctan (33 %ig in Diisopropanol),
2,2 Tl. Wasser.

Diese Polyolabmischung wird maschinell vermengt und mit 48 Tl. eines Dipropylenglykol-modifizierten Polyisocyanatgemischs der Diphenylmethanreihe mit einem NCO-Gehalt von 31% und einer Viskosität bei 25°C von 200 mPa . s wie in Beispiel 1 beschrieben zu einem schäumfähigen Gemisch vereinigt. Nach einer Reaktionszeit für das schäumfähige Gemisch kann das lackierte Teil entnommen werden. Die Rohdichte des entstehenden Formkunststoffs liegt bei 150 g/cm$^3$, die Filmdicke des Lacks bei 0,03 mm. Die Entformung ist einwandfrei an sämtlichen Stücken; Oberfläche störungsfrei.

| | | |
|---|---|---|
| Lackhaftung: | 1. Teil: gut; | 30. Teil: gut |
| Crockmetertest: | gut (trocken) | gut (trocken) |
| | gut (naß) | gut (naß) |

Verwendungsbeispiel 4 (Fahrradsättel)

Form aus Epoxidharz mit strukturierter Oberfläche, Temperatur 45°C; Lack: Acrylatlack gemäß B/4, Lackzusatz: 1,0 Tl. gemäß Beispiel A/21, entsprechend 10% auf Bindemittel, gelöst in 5 Tl. Toluol.

Die saubere, fettfreie Form wird direkt mit dem selbsttrennend eingestellten Lack besprüht und analog dem Verwendungsbeispiel 1 ausgeschäumt. Die Trockenfilmdicke des auf die Forminnenwand aufgebrachten Lacks liegt bei 0,03 mm. Die Rohdichte des entstehenden Formkunststoffs liegt bei 300 g/cm$^3$. Insgesamt werden auf diese Weise 30 Fahrradsättel hergestellt. Die Entformung an allen Stücken ist einwandfrei verlaufen.

| | | |
|---|---|---|
| Lackhaftung: | 1. Teil: gut; | 30. Teil: gut |
| Crockmetertest: | gut (trocken) | gut (trocken) |
| | gut (naß) | gut (naß) |

Verwendungsbeispiel 5 (Fahrradsättel)

Form aus Epoxidhärz mit strukturierter Oberfläche, Temperatur 45°C; Lack: Gemäß B/5, Lackzusatz: 0,5 Tl. gemäß Beispiel A/19, entsprechend 10% auf Bindemittel, gelöst in 5 Tl. Toluol. Die saubere, fettfreie Form wird direkt mit dem selbsttrennend eingestellten Lack besprüht und analog dem Verwendungsbeispiel 1 ausgeschäumt. Das mit einer ca. 0,03 mm Lackschicht versehene Formteil der Rohdichte 300 g/cm$^3$ kann nach einer Reaktionszeit von 4 Minuten entformt werden. Insgesamt werden auf diese Weise 30 Fahrradsättel hergestellt. Die Entformung verläuft einwandfrei an allen Stücken.

| | | |
|---|---|---|
| Lackhaftung: | 1. Teil: gut; | 30. Teil: gut |
| Crockmetertest: | gut (trocken) | gut (trocken) |
| | gut (trocken) | gut (naß) |

Verwendungsbeispiel 6 (Fahrradsättel)

Form aus Epoxidharz mit strukturierter Oberfläche, Temperatur 45°C; Lack: Basis Nitrozellulose gemäß Beispiel B/6, Lackzusatz: 1,6 Tl. gemäß Beispiel A/21, entsprechend 5% auf Bindemittel, gelöst in 5 Tl. Toluol.

Die saubere, fettfreie Form wird direkt mit dem selbsttrennend eingestellten Lack besprüht und analog dem Verwendungsbeispiel 1 ausgeschäumt. Nach einer Reaktionszeit von 4 Minuten kann das mit einer 0,03 mm dicken Lackschicht versehene, eine Rohdichte von 300 g/cm³ aufweisende Formteil entnommen werden. Der Versuch wird insgesamt 30-mal durchgeführt. Die Entformung verläuft einwandfrei an allen Stücken.

| | | |
|---|---|---|
| Lackhaftung: | 1. Teil: gut; | 30. Teil: gut |
| Crockmetertest: | gut (trocken) | gut (trocken) |
| | gut (naß) | gut (naß) |

Verwendungsbeispiel 7 (Platten)

Form aus Metall der Abmessung 40×40×0,8 cm mit strukturierter Oberfläche, Temperatur 60°C; Lack: Grundierungslack gemäß Beispiel B/3, Lackzusatz: 0,33 Tl. gemäß Beispiel A/17, entsprechend 5% auf Bindemittel, gelöst in 3 Tl. Toluol.

Die saubere, fettfreie Form wird mit dem selbsttrennend eingestellten Lack besprüht und nach 2 Sekunden Ablüftzeit mit folgendem, füllstoffhaltigen Reaktionsgemisch befüllt:

Polyolkomponente: 100 Tl. des Polyetherpolyols der OH-Zahl 28 gemäß Verwendungsbeispiel 3, 15 Tl. gemahlener Glasfaserfüllstoff der Länge 0,03 bis 0,5 mm,

50 Tl. einer Mischung aus 65% 1 - Methyl - 3,5 - diethylphenylendiamin - (2,4) und 35% 1 - Methyl - 3,5 - diethylphenylendiamin - (2,6),

0,2 Tl. eines Komplexes aus 1 Mol Dibutylzinndilaurat und 1 Mol 2,3 - Dimethyl - 3,4,5,6 - tetrahydropyrimidin und 50 Tl. eines Umsetzungsproduktes aus Tripropylenglykol mit 4,4'-Diphenylmethandiisocyanat (NCO-Gehalt: 23%).

Das Gemisch wird nach dem RSG-Verfahren bearbeitet. Bereits nach einer Reaktionszeit von 40 Sekunden wird entformt. Aus diese Weise wird ein Formkörper der Rohdichte 1200 g/cm³, der mit einer 0,05 mm dicken Grundlackschicht versehen ist, erhalten. Auf diese Weise werden insgesamt 30 Formteile hergestellt. Die Entformung verläuft in allen Stücken einwandfrei; die Lackschicht ist ohne Störungen und klebfrei.

| | | |
|---|---|---|
| Lackhaftung: | 1. Teil: gut; | 30. Teil: gut |
| Crockmetertest: | gut (trocken) | gut (trocken) |
| | gut (naß) | gut (naß) |

Der Grundierungslack ist ohne weitere Reinigung mit dem Zweikomponentenlack B/2 besprühbar, welcher nach Trocknung bei Raumtemperatur über Nacht eine gute Haftung und gute Ergebnisse im Crockmetertest zeigt. Die Oberfläche ist gut ausgeprägt und ohne Störungen im Verlauf.

Verwendungsbeispiel 8 (Platten)

Form aus Metall mit strukturierter Oberfläche gemäß Verwendungsbeispiel 7; Temperatur 60°C; Lack: Zweikomponentenlack gemäß Beispiel B/2, Lackzusatz: 2,0 Tl. gemäß Beispiel A/17, entsprechend 10% auf Bindemittel, gelöst in 2,0 Tl Toluol.

Die saubere, fettfreie Form wird mit dem selbsttrennend eingestellten Lack besprüht und nach 20 Sekunden Ablüftzeit mit der Reaktionsmischung gemäß Verwendungsbeispiel 7 befüllt. Der mit einer ca. 0,05 mm dicken Lackschicht versehen Formkörper der Rohdichte 1200 g/cm³ kann nach 40 Sekunden der Form entnommen werden. Auf diese Weise werden insgesamt 30 Formkörper hergestellt. Die Entformung gelingt in allen Fällen gut, der Lack ist gut strukturiert und völlig klebfrei.

| | | |
|---|---|---|
| Lackhaftung: | 1. Teil: gut; | 30. Teil: gut |
| Crockmetertest: | gut (naß) | gut (naß) |
| | gut (trocken) | gut (trocken) |

Verwendungsbeispiel 9 (Platten)

Form aus Metall mit struktuierter Oberfläche gemäß Verwendungsbeispiel 7, Temperatur 60°C; Lack: Zweikomponentenlack gemäß Beispiel B/7, Lackzusatz: 7,0 Tl. des Trennmittels gemäß Beispiel A/17, in 7,0 Tl. Toluol gelöst, entsprechend 5%, bezogen auf Bindemittel.

Die saubere, fettfreie Form wird mit dem selbsttrennend eingestellten Lack besprüht und nach 20 Sekunden Ablüftzeit mit dem Reaktionsgemisch gemäß Verwendungsbeispiel 7 befüllt. Nach einer Reaktionszeit von 40 Sekunden kann der mit einer ca. 0,05 mm dicken Lackschicht versehene, eine Rohdichte von 1200 g/cm³ aufweisende Formkörper der Form entnommen werden. Auf diese Weise werden insgesamt 30 Formkörper hergestellt. Die Entformung gelingt in allen Fällen gut, der Lack ist einwandfrei strukturiert und völlig klebfrei.

| | | |
|---|---|---|
| Lackhaftung: | 1. Teil: gut; | 30. Teil: gut |
| Crockmetertest: | gut (naß) | gut (naß) |
| | gut (trocken) | gut (trocken) |

Verwendungsbeispiel 10 (Platten)

Form aus Metall mit strukturierter Oberfläche gemäß Verwendungsbeispiel 7, Temperatur 60°C; Lack: Zweikomponentenlack gemäß Beispiel B/7, Lackzusätze: 10,5 Tl. des Trennmittels gemäß Beispiel A/20, in 10,5 Tl. Toluol gelöst, entsprechend 7,5% bezogen auf Bindemittel.

Die saubere, fettfreie Form wird mit dem selbsttrennend eingestellten Lack besprüht und nach 20 Sekunden Ablüftzeit mit dem Reaktionsgemisch gemäß Verwendungsbeispiel 7 befüllt. Nach einer Reaktionszeit von 40 Sekunden kann der mit einer ca. 0,05 mm dicken Lackschicht versehene, eine Rohdichte von 1200 g/cm$^3$ aufweisende Formkörper der Form entnommen werden. Auf diese Weise werden insgesamt 30 Formkörper hergestellt. Die Entformung gelingt in allen Fällen gut, der Lack ist einwandfrei strukturiert und völlig klebfrei.

| | | |
|---|---|---|
| Lackhaftung: | 1. Teil: gut; | 30. Teil: gut |
| Crockmetertest: | gut (naß) | gut (naß) |
| | gut (trocken) | gut (trocken) |

Vergleichsbeispiel 11 (PKW-Lenkrad)

Form aus Metall mit strukturierter Oberfläche, Temperatur 45°C; Lack: Einkomponentenlack nach B/1, Trennmittel nach Beispiel IX der DE—OS 1 953 637; 0,7 Tl. entsprechend 5% bezogen auf Bindemittel.

Es wird das schäumfähige Reaktionsgemisch gemäß Verwendungsbeispiel 1 zum Befüllen der Form eingesetzt. Im übrigen wurde analog Verwendungsbeispiel 1 gearbeitet.

Nach einer Reaktionszeit von 4 Minuten kann das lackierte Teil entnommen erden; das lackierte Lenkrad ist auch ohne Störungen entformbar, jedoch ist die Oberfläche klebrig und von Ausschwitzungen behaftet.

Vergleichsbeispiel 12 (PKW-Lenkrad)

Form aus Metall mit struktuierter Oberfläche, Form temperatur 45°C, Lack: Einkomponentenlack gemäß B/1, Trennmittel gemäß Beispiel 1 DE—OS 3 012 126 (1,4 Tl. gelöst in 5 Tl. Toluol, entsprechend 10%, bezogen auf Bindemittel).

Es wird wie in Verwendungsbeispiel 1 gearbeitet unter Verwendung des dort beschriebenen schäumfähigen Gemischs. Nach einer Reaktionszeit von 4 Minuten kann das lackierte Teil nicht ohne Zerstörung der Oberfläche, verursacht durch Ankleben der Lackschicht, entformt werden. Der eingesetzte Urethan-Siloxan-Harnstoff ist als Lacktrennmittel ungeeignet.

Vergleichsbeispiel 13 (PKW-Lenkrad)

Form aus Metall mit struktuierter Oberfläche, Temperatur 45°C, Lack: Einkomponentenlack gemäß B/1, Trennmittel: 1,4 Tl. eines α,ω - Bishydroxy - methyl - polydimethylsiloxans des OH-Gehalts 3,0%, entsprechend 10%, bezogen auf Bindemittel. Es wird wie in Verwendungsbeispiel 1 unter Verwendung des dort beschriebenen schäumfähigen Gemisches gearbeitet. Nach einer Reaktionszeit von 4 Minuten kann das lackierte Teil nicht ohne Zerstörung der Oberfläche, bedingt durch Anhaften der Lackschicht an der Form, entformt werden. Das eingesetzte Siloxan ist als Lacktrennmittel ungeeignet.

**Patentansprüche**

1. Verwendung von Polysiloxaneinheiten aufweisenden Polyisocyanat-Additionsprodukten, welche entweder durch Umsetzung von

a) mindestens zwei endständige Isocyanatgruppen aufweisende Umsetzungsprodukten von (i) im Sinne der Isocyanat-Additionsreaktion difunktionellen Polysiloxanen mit mindestens 2 Siloxaneinheiten der Formel $—O—Si(R)_2—$(R=$C_1—C_4$-Alkyl- oder Phenylrest) und einem Molekulargewicht von 194 bis 20000 mit endständigen, gegenüber Isocyanatgruppen reaktionsfähigen Gruppen mit (ii) überschüssigen Mengen an organischen Polyisocyanaten mit

b) mindestens eine tertiäre Aminogruppe und/oder mindestens eine Oxyalkyleneinheit aufweisenden, im Sinne der Isocyanat-Additionsreaktion monofunktionellen aliphatischen Alkoholen und/oder primären oder sekundären aliphatischen Aminen des Molekulargewichtsbereichs 75—5000 oder von

c) mindestens eine endständige Isocyanatgruppe aufweisende Umsetzungsprodukten, hergestellt durch Umsetzung von (iii) Verbindungen der unter b) genannten Art mit (iv) überschüssigen Mengen an organischen Polyisocyanaten und anschließender Entfernung des Polyisocyanatüberschusses mit

d) im Sinne der Isocyanat-Additionsreaktion difunktionellen Polysiloxanen mit endständigen, gegenüber Isocyanatgruppen reaktionsfähigen Gruppen hergestellt worden sind, als Trennmittel für Forminnenlacke bei der Herstellung von, mit einer Lackschicht versehenen, Formkunststoffen nach dem "in-mould-coating-Verfahren".

2. Verwendung gemäß Anspruch 1 bei der Herstellung von mit einer Decklackschicht versehenen Formkunststoffen auf Polyurethan-Basis.

3. Verwendung gemäß Anspruch 1 und 2 für, lineare Polyurethan-Polyharnstoffe als Bindemittel enthaltende, physikalisch trocknende Forminnenlacke.

4. Verwendung gemäß Anspruch 1 und 2 für, mindestens ein organisches Polyisocyanat und mindestens eine Polyhydroxylverbindung als Bindemittel enthaltende, Zweikomponenten-Polyurethan-Forminnenlacke.

**Revendications**

1. Utilisation de produits d'addition de polyisocyanates comportant des motifs polysiloxane que l'on a préparés en faisant réagir:

a) des produits réactionnels (comportant au moins deux groupes isocyanate terminaux) (i) de polysiloxanes difonctionnels dans le sens de la réaction d'addition d'isocyanate et comportant au moins deux motifs siloxane de formule —O—Si(R)$_2$— (R=radical alkyle en $C_1$—$C_4$ ou radical phényle), ayant un poids moléculaire de 194 à 20.000 et comportant des groupes terminaux réactifs vis-à-vis des groupes isocyanate avec (ii) des quantités excédentaires de polyisocyanates organiques, avec

b) des amines aliphatiques primaires ou secondaires et/ou des alcools aliphatiques monofonctionnels dans le sens de la réaction d'addition d'isocyanate, comportant au moins un groupe amino tertiaire et/ou au moins un motif oxyalkylène et ayant un poids moléculaire se situant dans l'intervalle allant de 75 à 5.000, ou en faisant réagir

c) des produits réactionnels comportant au moins un groupe isocyanate terminal, préparés par réaction (iii) de composés du type indiqué sub (b) avec (iv) des quantités excédentaires de polyisocyanates organiques et par élimination ultérieure de l'excès de polyisocyanate, avec

d) des polysiloxanes difonctionnels dans le sens de la réaction d'addition d'isocyanate et comportant des groupes terminaux réactifs vis-à-vis des groupes isocyanate, comme agents de démoulage pour vernis intérieurs de moules lors de la fabrication de matières synthétiques moulées pourvues d'une couche de vernis selon le procédé "in-mould-coating" (=enduction inverse).

2. Utilisation selon la revendication 1, lors de la fabrication de matières synthétiques moulées à base de polyuréthanes et pourvues d'une couche de vernis de recouvrement.

3. Utilisation selon les revendications 1 et 2 pour des vernis intérieurs de moules séchant physiquement et contenant des polyuréthane-polyurées linéaires comme agents liants.

4. Utilisation selon les revendications 1 et 2 pour des vernis intérieurs de moules de polyuréthanes à deux composants contenant au moins un polyisocyanate organique et au moins un composé polyhydroxy comme agents liants.

**Claims**

1. Use of polyisocyanate addition products containing polysiloxane units, which are produced either by reacting

a) reaction products containing at least two terminal isocyanate groups obtained by the reaction of (i) polysiloxanes which are difunctional in the isocyanate addition reaction, having at least 2 siloxane units of the formula —O—Si(R)$_2$— (R=$C_1$—$C_4$-alkyl or phenyl radical), a molecular weight of from 194 to 20 000 and isocyanate-reactive end groups, with (ii) excess quantities of organic polyisocyanates, with

b) aliphatic alcohols and/or primary or secondary aliphatic amines in the molecular weight range of from 75 to 5000 which are monofunctional in the isocyanate addition reaction and contain at least one tertiary amino group and/or at least one oxyalkylene unit, or

c) reaction products containing at least one terminal isocyanate group, produced by reacting (iii) compounds of the type given under b) with (iv) excess quantities of organic polyisocyanates and subsequent removal of the polyisocyanate excess, with

d) polysiloxanes containing isocyanate-reactive end groups which are difunctional in the isocyanate addition reaction, as mould release agents for in-mould-coating lacquers in the production of moulded plastics articles coated with a lacquer layer by the in-mould-coating process.

2. Use according to claim 1 in the production of polyurethane-based moulded plastics articles covered with a layer of top coat lacquer.

3. Use according to claims 1 and 2 for physically drying in-mould-coating lacquers containing linear polyurethane polyureas as binders.

4. Use according to claims 1 and 2 for two-component polyurethane in-mould-coating lacquers containing at least one organic polyisocyanate and at least one polyhydroxyl compound as binder.